Europäisches Patentamt

European Patent Office

Office européen des brevets

(11) Veröffentlichungsnummer : **0 391 842 B1**

(12) # EUROPÄISCHE PATENTSCHRIFT

(45) Veröffentlichungstag der Patentschrift :
**16.12.92 Patentblatt 92/51**

(21) Anmeldenummer : **90810215.5**

(22) Anmeldetag : **19.03.90**

(51) Int. Cl.⁵ : **B29C 65/08**

(54) Verfahren und Vorrichtung zum Ultraschallschweissen von Farbbändern.

(30) Priorität : **05.04.89 CH 1254/89**

(43) Veröffentlichungstag der Anmeldung :
**10.10.90 Patentblatt 90/41**

(45) Bekanntmachung des Hinweises auf die
Patenterteilung :
**16.12.92 Patentblatt 92/51**

(84) Benannte Vertragsstaaten :
**AT BE CH DE DK ES FR GB GR IT LI LU NL SE**

(56) Entgegenhaltungen :
**DE-A- 1 935 572**
**US-A- 3 508 989**
**US-A- 3 687 787**
**US-A- 4 121 964**

(73) Patentinhaber : **SM ENGINEERING AG**
**Roosstrasse 49**
**CH-8832 Wollerau (CH)**

(72) Erfinder : **Stöckli, Xaver**
**Bachtelstrasse 11**
**CH-8805 Richterswil (CH)**
Erfinder : **Messerli, Jürg**
**Eselweidweg 5**
**CH-8833 Samstagern (CH)**

(74) Vertreter : **Frauenknecht, Alois J. et al**
**c/o PPS Polyvalent Patent Service AG,**
**Mellingerstrasse 1**
**CH-5400 Baden (CH)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein verfahren zum dauerhaften Überlapp-verschweissen von Thermoplaste enthaltenden Bändern, mittels Ultraschall, wobei in einem ersten verfahrensschritt die Bänder zueinander ausgerichtet, durch Anlegen eines Vakuums auf deren Unterlage gehalten werden, in einem zweiten verfahrensschritt die Enden auf einem Amboss geschnitten werden und in einem dritten verfahrensschritt die geschnittenen Enden zur Überlappung gebracht werden und mittels einer Sonotrode bei einer vorgegebenen Ultraschall-Energie auf einem Amboss verschweisst werden.

Ein Verfahren gemäss den Oberbegriff des Anspruchs 1 ist bekannt aus US-PS-4,121,964. Hier wird eine glatte Schweissstelle eines endlosen magnetischen Bandes angestrebt. Dafür werden die über eine vorgegebene Weite sich überlappenden Bandenden, mittels eines Schneidmessers mechanisch geschnitten und auf einem nach oben konvexen Amboss mit einer glatten Sonotrode kontaktiert und durch Ultraschalleinwirkung verschweisst.

Im weiteren beschreibt die US-PS 4,018,955 ein verfahren für das verschweissen von Druckerbändern. Zur Erzielung von farbeaufnehmenden Verbindungen wird beim Schweissen der überlappten Farbbänder oberhalb der Schweisstelle, unter eine Sonotrode, ein Metallgitter eingelegt, ebenso wie unter die Schweisstelle auf den Amboss. Dadurch entsteht eine Schweissung mit Farbzellen, welche sich sowohl für einfarbige als auch mehrfarbige Endlosbänder für Drucker etc. eignet.

Weitere verfahren und Vorrichtungen zum Ultraschallschweissen von Farbbänder sind bekannt (US-PS 3,821,048 und US-PS 4,629,530), bei welchen durch ein kreuzweises Überlappen der Bandenden mit anschliessendem Schweissen eine Verbindung hergestellt wird. In praxi hat es sich gezeigt, dass diese Art des Verschweissens der Farbbandenden sich nachteilig auf deren Struktur und damit auf deren erzeugtes Druckbild und die Lebensdauer des Bandes auswirkt. Ebenfalls können mehrfarbige Bänder damit nicht geschweisst werden, weil sich die Farben in den Randzonen vermischen. Die entsprechenden Vorrichtungen zum Schweissen zeichnen sich durch eine Vielzahl von speziell hergestellten, aufwendigen mechanischen und pneumatischen Bauelementen aus und sind entsprechend zeit- und arbeitsintensiv in ihrer Wartung.

Es ist daher Aufgabe der Erfindung, ein verfahren und eine Vorrichtung zu schaffen, welche weitgehend auf handelsüblichen Normteilen und Apparaten beruhen und entsprechend einfach und kostengünstig zu warten sind. Ebenfalls sollen mehrfarbige Bänder präzise und wirtschaftlich miteinander verbunden werden, wobei die Schweissstelle kein vom übrigen Band wesentlich abweichendes Druckbild ergeben darf.

Erfindungsgemäss wird diese Aufgabe dadurch gelöst, dass die Bänder als Farbbänder vorgesehen sind und, eine Struktur aufweisen, dass in einem ersten verfahrensschritt die zu verschweissenden Enden auf zueinander parallel ausgerichteten und zueinander in einem Abstand befindlichen Führungsbahnen in den Unterlagen gehalten werden, dass in einem zweiten verfahrensschritt die Enden mittels einer Ultraschall-Sonotrode auf wenigstens einem Amboss unter Druck thermisch geschnitten und gleichzeitig die Schnittstellen versiegelt werden, dass in einem dritten verfahrensschritt diese Enden miteinander zur Überlappung gebracht werden und dass bei vorgegebener Ultraschallenergie mit einer strukturierten Sonotrode auf einem strukturierten Amboss verschweisst werden, wobei zwischen Sonotrode und Amboss ein entsprechend der Dicke der Farbbänder vorgewählter Abstand eingehalten wird.

Die erfindungsgemässe Vorrichtung besteht darin, dass die Unterlagen der Farbbänder aus zwei parallel zueinander in einem Abstand angeordneten Rolltischen besteht, zwischen welchen wenigstens ein Schneidamboss und ein Schweissamboss längsverschiebbar gelagert sind, dass über den Ambossen, zentral- und höhenverstellbar, eine rechteckförmige Sonotrode angeordnet ist und dass auf den Rolltischen Führungsbahnen vorgesehen sind, welche der Breite des Farbbandes entsprechen und die partiell Ausnehmungen zum Anlegen eines Vakuums aufweisen.

Die erfindungsgemäss hergestellten Schweisstellen sind derart weich und durchgefärbt, dass sie problemlos auch in Drucker mit 24 oder 48 Nadeln und in solchen mit Stahlbändern eingesetzt werden können, ohne dass beispielsweise die sehr dünnen Nadeln mechanisch überbeansprucht werden und dass merkliche Änderungen der Schrift im Bereich der Schweisstelle feststellbar sind.

Zudem wird die Standzeit der Farbbänder bzw. der Schweissstelle beträchtlich erhöht.

Das erfindungsgemässe verfahren und die Vorrichtung lassen in einem Bereich von bis zu 90° bis 30° schiefwinklige Verbindungen von Farbbändern realisieren. Somit können aufgrund der längeren Schweissnaht bzw. der längeren Überlappung auch Bänder mit nur einem geringen Anteil an Thermoplasten sicher verschweisst werden.

In abhängigen Ansprüchen sind zweckmässige Weiterbildungen des Erfindungsgegenstands charakterisiert.

Vorallem in der Massenproduktion von Farbbandkassetten hat sich das Absaugen der abgeschnittenen Endteile gemäss Anspruch 2 bewährt. - Es eliminiert aufwendige und störungsanfällige mechanische Mittel.

Bewährt hat sich eine Bewegung der Unterlagen nach Anspruch 3, da damit ein minimaler Aufwand an mechanischen Mitteln resultiert.

Der Einsatz von handelsüblichen Rolltischen, gemäss Anspruch 5, erlaubt eine sehr präzise Fertigung und minimalisiert den Aufwand an mechanischen Bewegungselementen.

Der Einsatz allgemein bewährter Antriebsmittel, entsprechend Anspruch 6, ist besonders wirtschaftlich.

Ein sehr einfaches Absaugen der Farbbandenden ist durch eine in der Führung angeordnete grosse Bohrung, Anspruch 7, gewährleistet.

Die Ausgestaltung nach Anspruch 8 ergibt eine optimale Fixierung des Farbbands, ohne dass irgendwelche Niederhalter notwendig sind. - Insbesondere haben sich Ausnehmung in Form eines handelsüblichen Feingewebes bewährt.

Die Ausgestaltung der Oberflächen, nach Anspruch 9, bewirkt besonders weiche und damit abnutzungsarme, nur wenig plastifizierte Schweisstellen, welche zudem ein einwandfreies Druckbild gewährleisten. - Kreuzweise ausgestaltete Strukturen haben sich als besonders vorteilhaft erwiesen.

Der Aufbau des Schneidambosses und des Schweissambosses kann als ein Werkstück oder vorteilhafterweise in einer entsprechenden Klemmhalterung, einem Werkstückträger, gemäss Anspruch 10, erfolgen.

Die Halterungen, gemäss Anspruch 11, sind durch randseitig angeordnete Gewindestifte in einfachster Weise ausrichtbar und damit formschlüssig mit der Fläche der Sonotrode einstellbar. - Damit wird eine hohe Präzision der Schweisstelle und ein nur minimaler verschleiss der Ambosse und der Sonotrode erzielt.

Nachfolgend wird die Erfindung anhand von Zeichnungen grundsätzlich erläutert.

Es zeigen:

Fig. 1 eine Vorrichtung zum Schneiden und Schweissen von Enden von Farbbändern,

Fig. 2 die vereinfachte Darstellung einer gesamten Anordnung mit einer Ultraschall-Schweissanlage und mit den entsprechenden Hilfs- und Kontrollapparaten,

Fig. 3 eine Sonotrode zum Schneiden und Schweissen,

Fig. 4 einen Schneidamboss,

Fig. 5 einen Schweissamboss,

Fig. 6 das charakteristische Schliffbild der Struktur an der Sonotrode und am Schweissamboss in Schnittdarstellung, und

Fig. 7 einen Ausschnitt der Struktur Fig. 3 in Draufsicht.

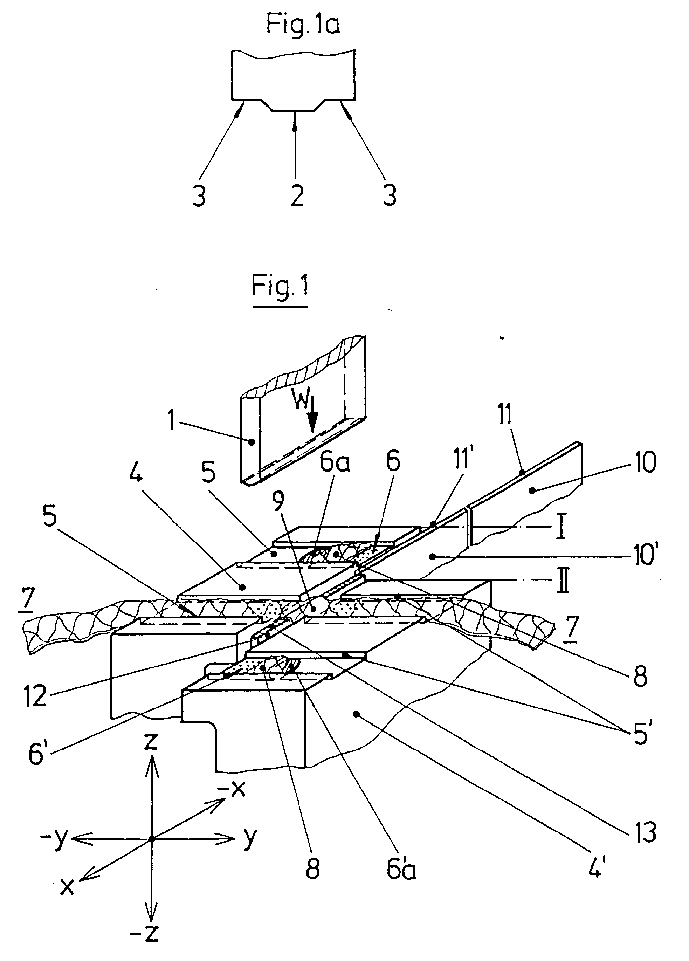

In Fig. 1 ist mit 1 eine Sonotrode einer handelsüblichen Ultraschall-Schweissanlage bezeichnet. Diese Sonotrode 1 weist stirnseitig Schneidauflagen 3 auf und besitzt in ihrem Endbereich eine Struktur 2. Die eingezeichnete Wirkrichtung W entspricht der Vertikalachse.

Zwei einander, in einem Abstand von 15 mm, gegenüberliegende Rolltische 4, 4' bilden die Unterlagen für ein Farbband 7, dessen Enden in Führungsbahnen 5, 5' liegen. Zwischen den beiden Rolltischen 4, 4' befinden sich zwei Schneidambosse 10 und 10' und ein Schweissamboss 12, welche am selben Werkstückträger angeordnet sind. Die Schneidambosse 10 und 10' weisen symmetrische Schneidkanten 11 bzw. 11' und der Schweissamboss 12 eine Struktur 13 auf.

Die beiden Rolltische 4, 4' sind in der Position I miteinander parallel und in ihren Breitseiten miteinander fluchtend; in der Position II, wie dargestellt, ist der Rolltisch 4' gegenüber dem Rolltisch 4 horizontal verschoben, derart, dass die Führungsbahn 5 mit der das andere Ende des Farbbands tragenden weiteren Führungsbahn 5' fluchtet. Die Bewegungsmöglichkeiten des Rolltisches 4' sind in üblicher Weise mit X, Y und Z bezeichnet.

Der Werkstückträger mit den beiden Ambossen 10 und 12 ist in X- und Z-Richtung verschiebbar; entsprechend der Art des Vorgangs ist das jeweilige Werkzeug im Einsatz, d.h. befindet sich unterhalb der Sonotrode 1.

In Fig. 1 ist zudem die Überlappungsstelle 9 des Farbbands 7 ersichtlich. Endseitige Abschnitte 8 des Farbbands 7 liegen in den Führungsbahnen 5 und 5' im Bereich von Bohrungen 6a bzw. 6'a. Weitere Ausnehmungen 6, 6' in den Führungsbahnen 5 und 5' sind in Form kleiner Bohrungen über die ganze Breite der Führungsbahnen angeordnet.

Die Arbeitsweise zum miteinander Verschweissen von Enden von Farbbändern ist die folgende:

Ein Farbband 7, meist vorgängig in eine Kassette zick-zackförmig gestopft, wird mit seinen Enden in die Führungsbahnen 5 eingelegt, derart, dass das eine Endstück in die gegenüber befindliche Führungsbahn 5' zu liegen kommt und das andere in der Führungsbahn 5' in die weitere gegenüberliegende Führungsbahn 5. Hier ist an den Ausnehmungen 6 und 6', Bohrungen im Durchmesser von 1,0 mm, ein Vakuum angelegt, so dass das Farbband, in diesen Bereichen, vollständig flach ausgebreitet, gehalten wird. - Es ist keine weitere Streck- oder Befestigungsmassnahme für die nachfolgenden Verfahrensschritte notwendig.

Die Sonotrode 1 wird nun in Wirkrichtung W auf das Farbband 7 und die Schneidamboss 10, 10', mit ihren Schneidkanten 11, 11' bewegt. Die Bewegung der Sonotrode 1 wird elektrisch gestoppt, wenn ein galvanischer Kontakt zwischen dieser und der Schneidkante 11 entsteht. - Der Anpressdruck der Sonotrode 1 ist auf 1,25 bar begrenzt und lässt sich entsprechend der Zähigkeit des Farbbands 7 variieren zwischen 1,0 und 2,0 bar. Die derart durchgeschnittenen Enden des Farbbandes 7 weisen eine unversehrte und thermisch versiegelte Schnittstelle auf.

Durch Anlegen eines Vakuums werden die Abschnitte 8 abgesogen und fallen in einen durch eine Schikane abgetrennten, nicht dargestellten, Behälter.

Jetzt wird der Rolltisch 4' um etwa 5 mm angehoben und in die in Fig. 1 gezeichnete Position II gebracht. Anschliessend bewegen sich die Rolltische 4' und 4 um 3 mm bzw. um 6 mm in Y-Richtung. Hierauf wird der Rolltisch 4' in minus Z-Richtung auf sein Ausgangsniveau abgesenkt, so dass die Überlappung 9 entsteht.

Gleichzeitig wird der Schneidamboss 10 in minus X-Richtung ausgefahren; ihm folgt der Schweissamboss 12, welcher somit unter die Überlappungsstelle 9 zu liegen kommt.

Die Sonotrode 1 bewegt sich erneut aus ihrer Ausgangslage in Wirkrichtung W, wird mit Ultraschall beaufschlagt und mit 3,0 bar auf einen, nicht dargestellten, mechanischen Anschlag gefahren, so dass zwischen dem Amboss 12 und der Sonotrode 1 ein Zwischenraum von 0,8 bis 1,5 Mal der einfachen Banddicke entsteht. Diese Einstellung kann sehr präzise über Mikrometerschrauben erfolgen und wird entsprechend der Schweissqualität bzw. dem an der Schweisstelle 9 erzielten Druckbild optimiert. Ebenso wird die zugeführte Ultraschallenergie nach Art eines Energiefensters an der Steuerung des Ultraschallkonverters eingestellt. - Im vorliegenden Beispiel wurde der Zwischenraum auf die einfache Banddicke eingestellt.

Sämtliche Bewegungen sind mit handelsüblichen Pneumatikelementen (Festo Pneumatic AG, D-7301 Berkheim) realisiert.

Als Rolltische dienen spielfreie Kugelkäfigtische (Fa. Schneeberger, CH-3360 Herzogenbuchsee) und zwar Rolltische des Types NK2-125 dienen zur Bewegung der Bahnführung auf der X-Achse, zwei des Types NK3-55 für die Y-Achsen-Bewegungen und zwei weitere NK3-205 zur Bewegung der Ambosse in der X-Achse.

Die verwendbaren Ultraschweissanlagen sind ebenfalls handelsüblich (Branson Sonic Power SA, CH-1227 Carouge, Modell 947 AE oder Telsonic Modell 2500, Telsonic AG, CH-9552 Bronschhofen) und arbeiten bevorzugterweise mit einer Ultraschallfrequenz von 40 kHz bzw. 36 kHz bei einer maximalen Generatorleistung von 700 Watt in der Betriebsart mit konstanter, vorgewählter Schweissenergieregelung. Der zeitliche Verlauf der angelegten Ultraschall-Schweissenergie ist in bekannter Weise mittels Mikroprozessoren gesteuert.

Die zum Ansaugen des Farbbands 7 und zum Absaugen von deren Endstücken 8 verwendete Vakuumgeräte sind, ebenfalls, handelsüblich (Seitenkanalverdichter und Airmouver; Rietschle, Hausamman & Co.AG, CH-8045 Zürich bzw. Wabco Westinghouse AG, CH-3018 Bern).

Die Feineinstellung des Anschlags für den Weg der Sonotrode 1 in Wirkrichtung W und der Überlappung 9 erfolgt durch eine sogenannte Einbaumessschraube (Tesa ETALON, Tesa SA, CH-1020 Renens).

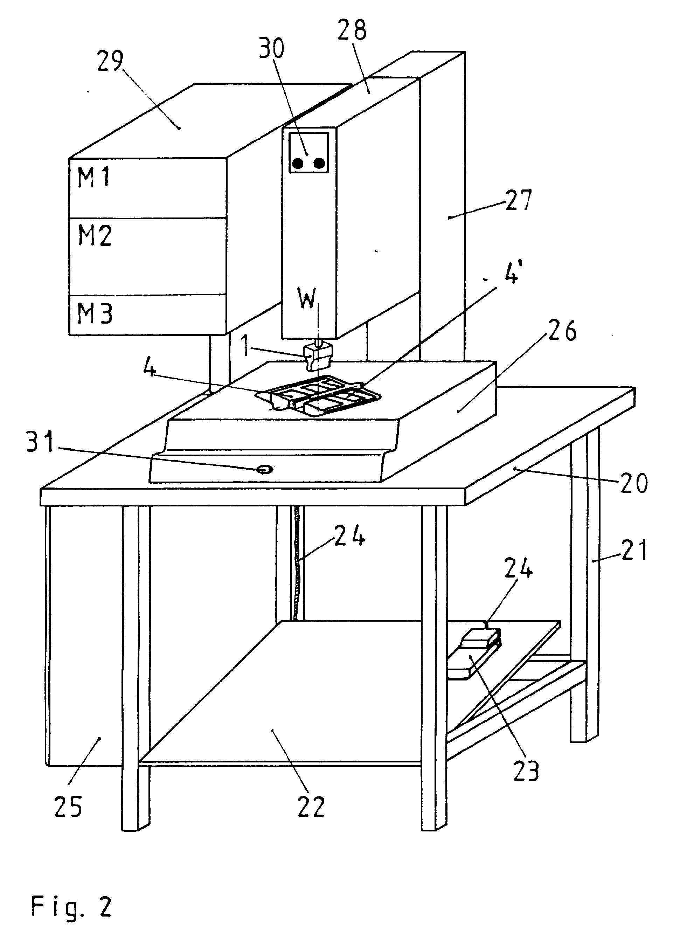

Gemäss Fig. 2 ist eine Tischplatte 20 mit Ständer 21 als Arbeitsplattform für die gesamte Anlage vorgesehen. Im Ständer 21 befindet sich eine Fussplatte 22, welche als Fuss-Auflage dient und auf der ein Fuss-Schalter 23 angeordnet ist. Dieser steht über ein Steuerkabel 24 mit einem Pneumatik-Steuerschrank 25 in Wirkverbindung. In einem Rolltisch-Gehäuse 26 sind die Rolltische 4 und 4' eingelassen. Dahinter befindet sich ein stabiler Ständer 27 als Träger für den Ultraschallkonverter 28. Daneben ist ein modular aus handelsüblichen Elementen M1, M2, M3 aufgebauter Steuerkasten 29 mit Signalgenerator und Mikroprozessoren und Eingabetableaus vorgesehen. Die Vorschub-Einstellung, d.h. die Vorgabe von Geschwindigkeit und Weg der Sonotrode 1, ist mit 30 bezeichnet; ein frontseitiger Notsteuerungs-Schalter mit 31.

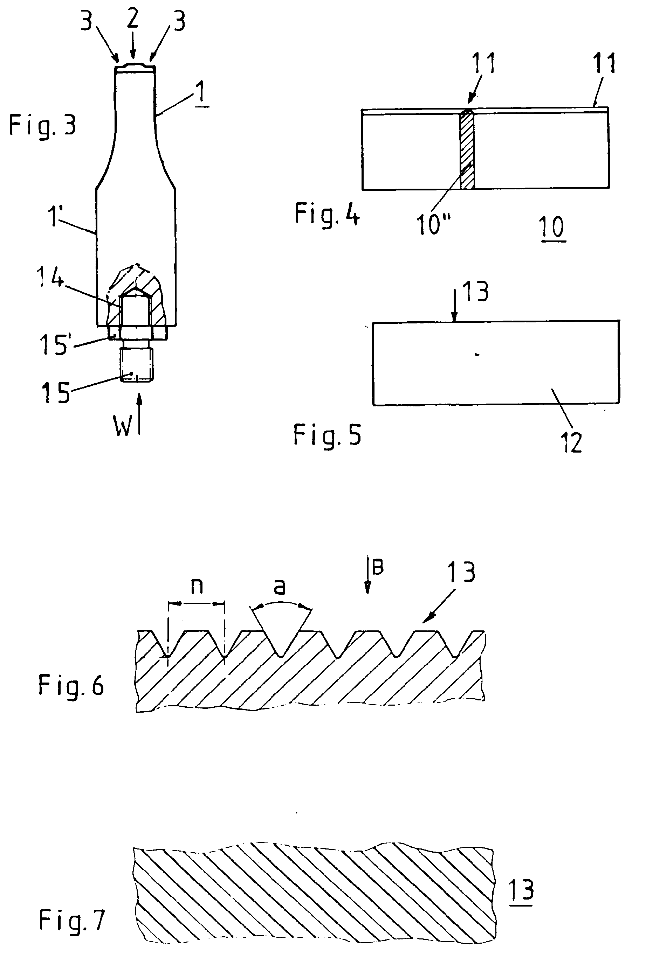

Bevorzugte Ausführungsformen einer Sonotrode 1 und der Ambosse 10 und 12 sind in den Fig. 3 bis 7 ersichtlich.

Die Sonotrode 1 in Fig. 3 - entgegen ihrer Wirkrichtung W dargestellt - weist endseitig eine Struktur 2 auf. Der relativ schmale Arbeitsteil führt von der Struktur 2 über Schneidauflagen 3 in eine Verdickung 1' über, in welcher, ebenfalls endseitig, eine Gewindebohrung 14 eingelassen ist. In dieser Gewindebohrung 14 befindet sich eine Kupplungsschraube 15 mit einem Sechskant 15', welche die mechanische Verbindung zum Ultraschall- Booster und -Konverter 28, Fig. 2, herstellen.

Der Schneidamboss Fig. 4, mit 10 bezeichnet, hat eine symmetrische Schneidkante 11, welche einen Winkel von 120° einschliesst. Das Profil des Schneidambosses 10 ist in der eingezeichneten Schnittdarstellung 10'' ersichtlich.

Der Schweissamboss 12, Fig. 5, weist auf seiner oberen Seite dieselbe Struktur 13 wie die Sonotrode 1 auf.

Diese Struktur ist im Schnitt ersichtlich in Fig. 6, wobei die Schrittlänge n = 0,4 mm und der Winkel a = 60°.

Fig. 7 stellt die Draufsicht, entsprechend der Blickrichtung B auf diese Struktur 13 dar; es ist daraus ersichtlich, dass die durch Präzisionsschleifen geschaffene schiefwinklige Struktur unter einem Winkel von ebenfalls 45° hergestellt ist.

Die Sonotrode 1 besteht aus 155 CrVMo12.1; das Material der Schneidambosse 10 und 12 ist Stellit (handelsübliches Hartmetall).

Die Standzeit der Sonotrode und des Schweissambosses ist sehr hoch, da sie beim Schweissen miteinander nicht in direkte Berührung geraten.

Bei breiten Farbbändern und/oder schiefwinklig zu schneidenden Bändern empfiehlt es sich, mehrere in einer Reihe angeordnete Schweissambosse zu verwenden und jedes Band einzeln, d.h. nacheinander zu schneiden.

Die erfindungsgemässe Vorrichtung kann durch ungelernte Kräfte betriebssicher bedient werden und erlaubt hohe Produktionsraten bei geringsten Ausfallzeiten für Wartungen etc.

Das erfindungsgemässe Verfahren lässt die Realisation verschiedenster maschinentechnischer Varianten zu. Beispielsweise können die Führungen für die Farbbänder auf den Rolltischen in einfacher Weise auswechselbar gestaltet werden; ebenfalls können durch verstellbare Seitenleisten Universalführungen für verschieden breite Farbbänder geschaffen werden. - Die im Ausführungsbeispiel mittels Mikrometerschrauben kontrollierbaren Bewegungen lassen sich, mit handelsüblichen Bauelementen, digital darstellen und könnten auch über Servomotoren eingestellt werden.

Das Verfahren und die Vorrichtung sind so konzipiert, dass sie zu einem vollautomatischen Betrieb erweiterbar sind, durch den Einsatz von Handling-Systemen und/oder von entsprechenden Robotern.

**Patentansprüche**

1. Verfahren zum dauerhaften Überlapp-Verschweissen von Thermoplaste enthaltenden Bändern, mittels Ultraschall, wobei in einem ersten Verfahrensschritt die Bänder zueinander ausgerichtet, durch Anlegen eines Vakuums auf deren Unterlage (4,4′) gehalten werden, in einem zweiten Verfahrensschritt die Enden auf einem Amboss (10,10′) geschnitten werden und in einem dritten Verfahrensschritt die geschnittenen Enden zur Überlappung gebracht werden und mit einer Sonotrode (1) mittels Ultraschall-Energie auf einem Amboss (12) verschweisst werden, dadurch gekennzeichnet,
- dass die Bänder als Farbbänder (7) vorgesehen sind und eine Struktur aufweisen,
- dass im ersten Verfahrensschritt die zu verschweissenden Enden auf zueinander parallel ausgerichteten und zueinander in einem Abstand befindlichen Führungsbahnen (5,5′) in den Unterlagen (4,4′) gehalten werden,
- dass im zweiten Verfahrensschritt die Enden mittels einer Ultraschall-Sonotrode (1) auf wenigstens einem Amboss (10,10′) unter Druck thermisch geschnitten und gleichzeitig die Schnittstellen versiegelt werden,
- dass im dritten Verfahrensschritt diese Enden miteinander zur Überlappung gebracht werden und dass bei vorgegebener Ultraschallenergie mit einer strukturierten Sonotrode (1,2) auf einem strukturierten Amboss (12) verschweisst werden,
- wobei zwischen Sonotrode (1,2) und Amboss (12) ein entsprechend der Dicke der Farbbänder vorgewählter Abstand eingehalten wird.

2. Verfahren nach Anspruch 1, dadurch gekennzeichnet, dass die abgeschnittenen Endteile mittels Vakuum von ihrer Unterlage abgesogen werden.

3. Verfahren nach Anspruch 1 oder 2, dadurch gekennzeichnet, dass die Unterlagen für die Enden der Farbbänder zumindest horizontal verschoben werden und dass die Sonotrode vertikal bewegt wird.

4. Vorrichtung zum dauerhaften Überlapp-Verschweissen von Thermoplaste enthaltenden Farbbändern (7) in welcher die Unterlagen der Bänder aus zwei Tischen (4,4′) mit partiellen Ausnehmungen (6,6′) zum Anlegen eines Vakuums bestehen, zwischen welchen ein Amboss (10) gelagert ist, und wobei über dem Amboss zentral- und höhenverstellbar eine Sonotrode (1) angeordnet ist, dadurch gekennzeichnet,
- dass die Tische Rolltische (4,4′) sind auf denen Führungsbahnen (5,5′) vorgesehen sind, welche der Breite des Farbbandes (7) entsprechen, in welchen die Ausnehmungen (6,6′) vorgesehen sind,
- dass je wenigstens ein Schneidamboss (10) und ein Schweissamboss (12), längsverschiebbar zwischen den Rolltischen (4,4′) angeordnet sind,
- und dass die Sonotrode (1) rechteckförmig ausgestaltet ist.

5. Vorrichtung nach Anspruch 4, dadurch gekennzeichnet, dass wenigstens ein Rolltisch (4′) höhenverstellbar angeordnet ist.

6. Vorrichtung nach Anspruch 5, dadurch gekennzeichnet, dass die Längs- und Höhenverstellung der Rolltische (4,4′) sowie die Längsbewegung der Schneid- und Schweissambosse (10,12) über hydraulische und/oder pneumatische Antriebsmittel erfolgt.

7. Vorrichtung nach Anspruch 4, dadurch gekennzeichnet, dass auf der jeweils das abgeschnittene Farbbandende aufnehmenden Führungsbahn (5,5′) eine sich über mindestens zwei Drittel der Breite der Führungsbahn erstreckende Bohrung (6a,6′a) mit einer daran angeschlossenen Vakuumleitung vorgesehen ist.

8. Vorrichtung nach Anspruch 4, dadurch gekennzeichnet, dass zumindest in den den Schneid- und Schweissambossen (10,12) benachbarten Bereichen der Führungsbahnen (5,5′) eine Vielzahl von Ausnehmungen (6,6') vorgesehen ist, an welche Vakuumleitungen angeschlossen sind.

9. Vorrichtung nach Anspruch 4, dadurch gekennzeichnet, dass die Sonotrode (1) und der Schweissamboss (12) je eine aufeinander abgestimmte Oberflächenstruktur aufweisen.

10. Vorrichtung nach Anspruch 4 oder 9, dadurch gekennzeichnet, dass der Schneidamboss (10) und der Schweissamboss (12) einstückig sind oder auf demselben Werkstückträger angeordnet sind.

11. Vorrichtung nach Anspruch 4, dadurch gekennzeichnet, dass der Schneidamboss (10) und der Schweissamboss (12) auf je einer höhen- und winkelverstellbaren Halterung gelagert sind.

**Claims**

1. A method for the permanent overlap-welding of ribbons containing thermoplastics, by means of ultrasonics, the ribbons being aligned with one another and held on their support (4,4') by applying a vacuum in a first step, the ends being cut on an anvil (10,10') in a second step and the cut ends being brought to overlap and welded on an anvil (12) with a sonotrode (1) by means of ultrasonic energy in a third step, characterised in that
    - the ribbons are provided as ink ribbons (7) and have a texture,
    - in the first step, the ends to be welded are held on guideways (5,5') aligned parallel to one another and located at a distance from one another in the supports (4,4'),
    - in the second step, the ends are cut thermally under pressure on at least one anvil (10,10') by means of an ultrasonic sonotrode (1) and the cut points are sealed simultaneously,
    - in the third step, these ends are brought to overlap one another and are welded on a textured anvil (12) with a textured sonotrode (1,2) by means of said ultrasonic energy,
    - a preselected distance, corresponding to the thickness of the ink ribbons, being maintained between the sonotrode (1,2) and the anvil (12).

2. A method according to Claim 1, characterised in that the cut-off end parts are sucked off their support by means of vacuum.

3. A method according to Claim 1 or 2, characterised in that the supports for the ends of the ink ribbons are displaced horizontally at least and in that the sonotrode is moved vertically.

4. A device for the permanent overlap-welding of ink ribbons (7) containing thermoplastics, in which the supports of the ribbons consist of two tables (4,4') with partial recesses (6,6') for the application of a vacuum, an anvil (10) being mounted between these tables (4,4') and a sonotrode (1) being arranged over the anvil so as to be centrally and vertically adjustable, characterised in that
    - the tables are rolling tables (4,4') provided with guideways (5,5') which correspond to the width of the ink ribbon (7) and in which the recesses (6,6') are provided,
    - at least one cutting anvil (10) and one welding anvil (12) are arranged so as to be longitudinally displaceable between the rolling tables (4,4'),
    - and the sonotrode (1) is rectangularly shaped.

5. A device according to Claim 4, characterised in that at least one rolling table (4') is arranged so as to be vertically adjustable.

6. A device according to Claim 5, characterised in that the longitudinal and vertical adjustment of the rolling tables (4,4') and the longitudinal movement of the cutting and welding anvils (10,12) is effected via hydraulic and/or pneumatic drive means.

7. A device according to Claim 4, characterised in that, on the guideway (5,5') receiving the cut-off end of the ink ribbon, a borehole (6a,6'a) - which extends over at least two thirds of the width of the guideway - is provided with a vacuum line connected thereto.

8. A device according to Claim 4, characterised in that a plurality of recesses (6,6') is provided, at least in the regions of the guideways (5,5') adjacent to the cutting and welding anvils (10,12), vacuum lines being connected to these recesses (6,6').

9. A devive according to Claim 4, characterised in that the sonotrode (1) and the welding anvil (12) correspond to one another in their surface texture.

10. A device according to Claim 4 or 9, characterised in that the cutting anvil (10) and the welding anvil (12) are formed in one piece or are arranged on the same workpiece carrier.

11. A device according to Claim 4, characterised in that the cutting anvil (10) and the welding anvil (12) are each mounted on a vertically and angularly adjustable holder.

## Revendications

1. Procédé pour effectuer une soudure avec chevauchement, durable, entre des bandes contenant des thermoplastiques, au moyen d'ultrasons, où, dans une première étape de procédé les bandes sont orientées les unes par rapport aux autres, maintenues par application d'un vide sur leur base (4,4′), où dans une deuxième étape de procédé les extrémités sont découpées sur une enclume (10,10′) et où dans une troisième étape de procédé les extrémités découpées sont placées en chevauchement et soudées à l'aide d'une sonotrode (1), au moyen d'une énergie ultrasonore, sur une enclume (12), caractérisé en ce que

 - les bandes sont prévues sous forme de bandes colorées (7) et présentent une structure,
 - dans la première étape de procédé, les extrémités à souder sont orientées parallèlement entre elles et maintenues l'une par rapport à l'autre, dans des bandes de guidage (5,5′) situées à distance, dans les bases (4,4′),
 - dans la deuxième étape de procédé, les extrémités sont découpées au moyen dune sonotrode à ultrasons (1), sur au moins une enclume (10,10′), le découpage s'effectuant par voie thermique et sous pression avec réalisation simultanée du scellement des interfaces,
 - dans la troisième étape de procédé, ces extrémités sont placées en chevauchement entre elles et en ce que, pour une énergie ultrasonore prédéterminée, apportée avec une sonotrode structurée (1,2), elles sont soudées sur une enclume structurée (12),
 - un espacement présélectionné, correspondant à l'épaisseur des bandes colorées, étant respecté entre la sonotrode (1,2) et l'enclume (12).

2. Procédé selon la revendication 1, caractérisé en ce que les parties d'extrémité découpées sont aspirées de leur base au moyen d'un vide.

3. Procédé selon la revendication 1 ou 2, caractérisé en ce que les bases destinées aux extrémités des bandes colorées sont déplacées, au moins horizontalement, et en ce que la sonotrode est déplacée verticalement.

4. Dispositif pour effectuer une soudure avec chevauchement, durable, entre des bandes colorées (7) contenant des thermoplastiques, dans lequel les bases des bandes sont composées de deux tables (4,4′) comportant des évidements partiels (6,6′), pour appliquer un vide, tables (4,4′) entre lesquelles est placée une enclume (10) et où une sonotrode (1) est disposée de façon réglable par rapport au centre et en hauteur, sur l'enclume, caractérisé en ce que

 - les tables sont des tables à rouleaux (4,4′), sur lesquelles sont prévues des bandes de guidage (5,5′), qui correspondent à la largeur de la bande colorée (7), tables dans lesquelles sont prévus les évidements (6,6′),
 - au moins une enclume de découpage (10) et une enclume de soudage (12) sont disposées chacune déplaçables longitudinalement entre les tables à rouleaux (4, 4′),
 - et la sonotrode (1) est de configuration rectangulaire.

5. Dispositif selon la revendication 4, caractérisé en ce qu'au moins une table à rouleaux (4′) est disposée réglable en hauteur.

6. Dispositif selon la revendication 5, caractérisé en ce que le déplacement de réglage longitudinal et vertical des tables à rouleau (4,4′), ainsi que le déplacement longitudinal des enclumes de découpage et de soudage (10,12) s'effectue par l'intermédiaire de moyens d'entraînement hydrauliques et/ou pneumatiques.

7. Dispositif selon la revendication 4, caractérisé en ce qu'un perçage (6a,6′a), avec une conduite de vide lui étant raccordée et s'étendant sur au moins deux tiers de la largeur de la bande de guidage, est prévu sur la bande de guidage (5,5′) spécifique qui supporte chaque fois l'extrémité de bande colorée découpée.

8. Dispositif selon la revendication 4, caractérisé en ce qu'au moins dans les zones, voisines des enclumes de découpage et de soudage (10,12), des bandes de guidage (5,5′) sont prévus une pluralité d'évidements (6,6′), auxquels sont raccordés des conduites de vide.

9. Dispositif selon la revendication 4, caractérisé en ce que la sonotrode (1) et l'enclume de soudage (12) présentent chacune une structure de surface corrélée.

10. Dispositif selon la revendication 4 ou 9, caractérisé en ce que l'enclume de découpage (10) et l'enclume de soudage (12) sont réalisées d'un seul tenant ou disposées sur le même porte-pièce.

11. Dispositif selon la revendication 4, caractérisé en ce que l'enclume de découpage (10) et l'enclume de soudage (12) sont chacune montées sur une fixation réglable en hauteur et angulairement.

Fig. 1a

Fig. 1

Fig. 2

Fig. 3

Fig. 4

Fig. 5

Fig. 6

Fig. 7